# EUROPEAN PATENT SPECIFICATION

(11) **EP 3 400 763 B1**
(45) Date of publication and mention of the grant of the patent: **30.08.2023**
(21) Application number: 18000335.2
(22) Date of filing: 09.04.2018
(51) Int. Cl.: A01B 61/00

(54) **DEVICE FOR CONTROLLING VIBRATIONS ON AN AGRICULTURAL MACHINE SUCH AS A MULCHING MACHINE**
VORRICHTUNG ZUR STEUERUNG VON SCHWINGUNGEN AN EINER LANDWIRTSCHAFTLICHEN MASCHINE WIE EINE MULCHMASCHINE
DISPOSITIF POUR CONTRÔLER LES VIBRATIONS SUR UNE MACHINE AGRICOLE TELLE QU'UNE MACHINE DE PAILLAGE

(30) Priority: 08.05.2017 SI 201700124
(43) Date of publication of application: 14.11.2018
(73) Proprietor: Kos, Branko, 8250 Brezice (SI); Cvetanovski, Aleksandar, 8250 Brezice (SI)
(72) Inventor: Kos, Branko, 8250 Brezice (SI); Cvetanovski, Aleksandar, 8250 Brezice (SI)
(74) Representative: Golmajer Zima, Marjanca

(56) References cited:
- EP-A1- 1 221 280
- EP-A1- 2 756 748
- WO-A1-2014/207777
- CN-A- 102 589 681
- DE-A1-102013 222 154
- US-A1- 2011 051 558
- US-A1- 2014 196 919

## Description

### Object of Invention

The object of the invention is a device for controlling vibrations mulching machine.

### Technical Problem

The technical problem solved by the present invention is how to conceive a device that will be arranged on a mulching machine and will allow controlling of vibrations that occur during the operation of the mulching machine as a result of improper operation of the mulching machine, as well as assessment of the vibrations in terms of determination of a critical level of vibrations that can cause damage to individual components of the mulching machine or the mulching machine as such and would result in a standstill and in a requirement for repair.

### Prior Art

A mulching machine is preferably formed as an attachment on an agricultural machine such as a tractor or another type of a working machine. The mulching machine is construed for the working of agricultural and municipal areas, green areas, road embankments, and deserted areas by crushing and cutting grass, plant remains, cut plants in orchards or vineyards to a size suitable to be left on the ground and to turn to humus. As the working conditions created by the surfaces to be worked are difficult, a mulching machine and all its components must be designed in a robust manner to withstand the loads caused by such surfaces.

A mulching machine comprises a housing, in which a tube-like rotor having hammers arranged thereon is mounted via a shaft, said hammers rotating together with the rotor while the mulching machine is in operation and chopping and/or cutting plant parts when passing over a surface to be worked. To prevent additional loads brought about by the mulching machine or by the rotation of the rotor with the hammers, it is important for the rotor with the hammers to be properly balanced on the shaft. The rotor is balanced by conventional methods that also define the sizes of allowable deviations.

When a mulching machine passes over the surface to be worked, plant parts that differ both in the type and size, even stones, enter the mulching machine. When these parts are too big or of an inappropriate type, particularly stones, they can cause damage to the hammers and/or blades and even to the rotor itself; the hammers can get splintered, crushed, the rotor can get indentations. As the distribution of the mass on the rotor changes, the rotor is no longer in its balanced state and vibrations may occur, which get transferred to other machine parts of the mulching machine, particularly to bearings. A cause for the damages can also be a blocked rotor because of an object getting stuck in the mulching machine. In the event of an improper operation of a mulching machine, the tractor operator must interrupt his work and eliminate the cause, otherwise the mulching machine can get damaged. A breakdown of a mulching machine means a longer work interruption, replacement of certain machine parts on the site, if possible, otherwise the mulching machine needs to be repaired at a remote location. It is therefore important for the tractor operator to early detect the improper operation of the mulching machine to prevent this type of damages to the mulching machine. Since both the tractor and the mulching machine have a robust construction that is required due to the work conditions, various shapes and structures of the surfaces to be worked, the user who is located on the tractor finds it difficult to detect additional vibrations of the mulching machine, which result from an improper operation of the mulching machine. At the same time, the user cannot be expected to frequently interrupt his work to check the situation of the mulching machine. Even more, this would not be efficient because improper operation cannot be anticipated and can cause damages if it lasts too long. DE 10 2013 222 154 discloses a device for controlling vibrations on an agricultural machine.

### Solution to the Technical Problem

The technical problem is solved by a device for controlling vibrations on a mulching machine which comprises a housing, in which a tube-like rotor is mounted via a shaft, and hammers arranged on the rotor for chopping and/or cutters for cutting incoming plant parts, wherein the device comprises at least one sensor for detecting vibrations and for measuring their amplitude with a signal S1, a signal S1 receiver that is part of a smart mobile device and receives the signal S1 of the sensor, a processor that uses a mathematical algorithm to evaluate the signal S1 as an amplitude of a vibration as a function of duration of a vibration, to compare the size of the amplitude of a vibration with the predetermined value of the amplitude; if the predetermined value is reached or exceeded, the data on the value being achieved/exceeded is transmitted, a data display that provides the user in visual or aural information about the size of the measured amplitude of the vibrations.

The device of the invention allows the mulching machine user to control its functioning during the operation of the mulching machine without having to interrupt his work. The device is configured in a way that the vibrations of the mulching machine resulting from the unevenness of the ground to be worked are annulled on the basis of a time component. The vibrations resulting from the unevenness of the ground to be worked can reach and even considerably exceed the predetermined threshold values of vibrations that are determined on the basis of exploitation experience, yet such vibrations are short-term vibrations and do not cause any damages to the mulching machine. On the other hand, the vibrations which appear on the mulching machine, particularly on the rotor due to a damaged rotor and/or hammeralcutters, or due to the rotor being unbalanced, are long-term vibrations and cause permanent damages to the mulching machine.

The solution to the technical problem will be described by way of an embodiment.

The mulching machine comprises a housing provided with an assembly for fastening to a known three-point attachment assembly of a tractor with a connection to a cardan shaft output on a tractor or another working machine. The housing accommodates a tube-like rotor that is mounted in the housing at each end via a shaft. Hammers for chopping and/or cutters for cutting incoming plant parts are arranged on the rotor in any known way. A sensor for measuring time-dependent vibrations with a signal S 1 is arranged on the housing at least in one area of the rotor mounting, preferably in both mounting areas. The sensor connected to a power source is located on the housing of the mulching machine in a section most exposed to rotor vibrations due to the rotor mounting in the housing and at the same time least exposed to vibrations caused by other components of the mulching machine. The sensor measures vibrations in all three coordinate axes x, y, z at predetermined time intervals that are shorter than the time intervals, in which the user wants to obtain data on vibrations. In the sensor, the measured vibrations are synthesized into resultants by means of a mathematical algorithm. The sensor further includes a transmitter for transmitting the signal S1, preferably a transmitter using the Bluetooth or WI-FI wireless protocols. The sensor transfers the resultants of the measurements as the signal S1 in a wireless manner to the receiver located within a smart mobile device, such as a mobile phone, a tablet. The signal S1 is evaluated by means of the previously installed mathematical algorithm in the processor of a smart mobile device into amplitude A of a vibration as a function of the duration of the vibration.

Although the sensor location is selected in a way to keep the value of the vibrations not resulting from the unbalance of the rotor at the lowest level possible, these vibrations are contained in the measurements anyway. Such vibrations are short-term vibrations and can be eliminated on the basis of a temporal component, i. e. a predetermined required minimum period of duration of vibrations of certain amplitude.

The allowable size of vibrations on the mulching machine depends on the one hand on the type and size of a mulching machine and on work conditions or the type and structure of the ground to be worked on the other. To keep the reference allowable size of vibrations as close as possible to the actual allowable size of vibrations that will not be too high and will cause the mulching machine to get damaged despite the measurements, or too low and would require too frequent work interruptions, at least the data on the type of the mulching machine or all the required data concerning the working of the surface of the ground are entered into the user application through a smart mobile device before each use, said application considering the input values when determining the allowable sizes of vibrations.

The vibrations of the mulching machine are measured constantly during the operation. If the measured signal S 1 which is revalued into the amplitude A of the vibration reaches or exceeds the predetermined value of the amplitude and if the duration of the predetermined value of the amplitude is identical to or longer than the predetermined time interval, the user gets a message on the exceeded size of the vibration. The user receives the message to his smart mobile device, either in a graphical and/or acoustic form, depending on the selection of the user and/or options of the mobile device. The message can be formed as a function of the size of the measured vibration.

The device of the invention enables the user to be acquainted with the status of the mulching machine during the entire operation. When the values of vibrations resulting from the rotor being unbalanced and/or from a material being stuck are reached or exceeded, the user has a possibility of immediate action; he interrupts his work, checks the status of the mulching machine and acts accordingly. The device of the invention prevents damages to other machine parts or the breakdown of the machine.

## Claims

1. A mulching machine with a device for monitoring vibrations of said mulching
machine,the machine
comprising a housing, in which a tube-like rotor is mounted via a shaft,
and hammers arranged on the rotor for chopping and/or cutters for cutting incoming plant parts,
**characterized in that** the device for monitoring time-dependent vibrations of the mulching machine comprises
at least one sensor arranged on the housing for detecting vibrations, measuring their amplitudes in all three coordinate axes (x, y, z) at predetermined time intervals,
a mathematical algorithm within the sensor to synthesize the amplitudes of detected vibrations into resultants to create a signal (S1),
a transmitter for transmitting a signal (S 1) of the sensor,
a smart mobile device,
a signal receiver that is part of the smart mobile device and receives the signal (S1) from the sensor a processor installed within the smart mobile device that uses a mathematical algorithm to evaluate the signal (S1) as an amplitude of a vibration as a function of duration of the vibration, to compare the size of the amplitude of a vibration with the predetermined value of the amplitude, and if the predetermined value is reached or exceeded, to transmit the data on the value being achieved/exceeded,
a data display that provides the user with the data on the size of the measured amplitude of the vibrations in a visual or acoustic way.

2. Device according to claim 1, **characterized in that** the at least one sensor for
monitoring and synthesizing vibrations is arranged on the housing of the mulching machine in the area of the rotor mounting.

3. Device according to any of the preceding claim, **characterized in that** the signal transmitter and the signal receiver are of a type functioning by the wireless protocol.

## Patentansprüche

1. Mulchmaschine mit einer Vorrichtung zur Überwachung von Schwingungen der Mulchmaschine, wobei die Maschine ein Gehäuse aufweist, in dem über eine Welle ein rohrförmiger Rotor und auf dem Rotor angeordnete Hämmer zum Häckseln und/oder Messer zum Schneiden ankommender Pflanzenteile gelagert sind,
**dadurch gekennzeichnet, dass** die Vorrichtung zur Überwachung zeitabhängiger Schwingungen der Mulchmaschine umfasst: mindestens einen am Gehäuse angeordneten Sensor zum Erfassen von Schwingungen und Messen ihrer Amplituden in allen drei Koordinatenachsen (x, y, z) in vorgegebenen Zeitintervallen,
einen mathematischen Algorithmus im Sensor, der die erfassten Schwingungen zu Resultanten synthetisiert und ein Signal erzeugt (Sl),
einen Sender zum Übertragen eines Signals (S1) des Sensors,
eine intelligente Mobilvorrichtung,
einen Signalempfänger, der Teil der intelligenten Mobilvorrichtung ist und das Signal (S1) aus dem Sensor empfängt, einen in der intelligenten Mobilvorrichtung installierten Prozessor, der mittels eines mathematischen Algorithmus das Signal (S1) als Amplitude einer Schwingung in Abhängigkeit von der Dauer der Schwingung auswertet, um die Größe der Amplitude einer Schwingung mit dem vorbestimmten Wert der Amplitude zu vergleichen und, wenn der vorbestimmte Wert erreicht oder überschritten wird, die Daten über den erreichten/überschrittenen Wert zu übertragen,
eine Datenanzeige, die dem Benutzer die Daten über die Größe der gemessenen Schwingungsamplitude in visueller oder akustischer Form bereitstellt.

2. Vorrichtung gemäß Anspruch 1, **dadurch gekennzeichnet, dass** der mindestens eine Sensor zur Überwachung und Synthese von Schwingungen am Gehäuse der Mulchmaschine im Bereich der Rotorlagerung angeordnet ist.

3. Vorrichtung gemäß einem der vorhergehenden Ansprüche, **dadurch gekennzeichnet, dass** der Signalsender und der Signalempfänger eine Ausführung sind, die nach dem Drahtlosprotokoll arbeitet.

## Revendications

1. Machine de paillage avec un dispositif pour surveiller des vibrations de ladite machine de paillage, la machine comprenant un logement, dans lequel un rotor de type tube est monté par l'intermédiaire d'un arbre, et des marteaux agencés sur le rotor pour hacher et/ou des couteaux pour couper des parties de plante arrivantes,
**caractérisée en ce que** le dispositif pour surveiller des vibrations à dépendance temporelle de la machine de paillage comprend
au moins un capteur agencé sur le logement pour détecter des vibrations, mesurer leurs amplitudes dans tous les trois axes de coordonnées (x, y, z) à des intervalles de temps prédéterminés,
un algorithme mathématique à l'intérieur du capteur pour synthétiser les amplitudes de vibrations détectées en résultantes pour créer un signal (Sl),
un transmetteur pour transmettre un signal (S1) du capteur,
un dispositif mobile intelligent,
un récepteur de signal qui fait partie du dispositif mobile intelligent et reçoit le signal (S1) à partir du capteur, un processeur installé à l'intérieur du dispositif mobile intelligent qui utilise un algorithme mathématique pour évaluer le signal (S1) en tant qu'amplitude d'une vibration en fonction d'une durée de la vibration, pour comparer la taille de l'amplitude d'une vibration à la valeur prédéterminée de l'amplitude, et, si la valeur prédéterminée est atteinte ou dépassée, pour transmettre les données sur la valeur atteinte/dépassée,
un écran d'affichage de données qui fournir à l'utilisateur les données sur la taille de l'amplitude mesurée des vibrations de manière visuelle ou acoustique.

2. Dispositif selon la revendication 1, **caractérisé en ce que** l'au moins un capteur pour surveiller et synthétiser des vibrations est agencé sur le logement de la machine de paillage dans la zone du montage de rotor.

3. Dispositif selon une quelconque revendication précédente, **caractérisé en ce que** le transmetteur de signal et le récepteur de signal sont d'un type fonctionnant par protocole sans fil.
